# EUROPEAN PATENT APPLICATION

(11) **EP 1 712 572 A1**
(43) Date of publication of application: **18.10.2006**
(21) Application number: 04819839.4
(22) Date of filing: 30.11.2004
(51) Int. Cl.: C08F 32/00, C08F 4/70, C08F 2/38

(54) **PROCESS FOR PRODUCING CYCLOOLEFIN ADDITION POLYMER**

(30) Priority: 05.12.2003 JP 2003407558
(71) Applicant: JSR Corporation, Tokyo 104-0045 (JP)
(72) Inventor: EBATA, Satoshi c/o JSR CORPORATION, Tokyo 1040045 (JP); KAIZU, Michitaka c/o JSR CORPORATION, Tokyo 1040045 (JP); OSHIMA, Noboru c/o JSR CORPORATION, Tokyo 1040045 (JP)
(74) Representative: TBK-Patent
(86) International application number: PCT/JP2004/017813
(87) International publication number: WO 2005/054312

(57) **Abstract**

[Means to solve problems] The process for preparing a cycloolefin addition polymer comprises addition-polymerizing monomers containing a specific cycloolefin compound in the presence of ethylene and a multicomponent catalyst containing, as essential components, (a) a palladium compound, (b) a compound selected from an ionic boron compound, an ionic aluminum compound, a Lewis acidic aluminum compound and a Lewis acidic boron compound and (c) a specific phosphine compound or its phosphonium salt. [Effect] A cycloolefin compound is addition-polymerized using a specific palladium catalyst and using ethylene as a molecular weight modifier, whereby a cycloolefin addition polymer having a molecular weight preferable for a sheet or a film used for an optical material can be prepared using small amounts of the molecular weight modifier and the palladium catalyst.

## Description

### TECHNICAL FIELD

The present invention relates to a process for preparing a cycloolefin addition polymer that is excellent in optical transparency, heat resistance and adhesion property and is preferable for an optical material. More particularly, the present invention relates to a process for preparing a cycloolefin addition polymer, in which amounts of a catalyst and a molecular weight modifier used can be reduced and a cycloolefin addition polymer having been controlled to have a molecular weight suitable for processing operation or the like can be obtained.

### BACKGROUND ART

In fields of optical parts, such as lenses and sealing materials, liquid crystal display device parts, such as backlight, light guide plate, TFT substrate and touch panel, etc., where inorganic glasses have been heretofore employed, replacement of the inorganic glasses by optically transparent resins has been promoted recently with requirements for lightweight, small-sized and high-density parts. As such optically transparent resins, addition polymers of norbornene (bicyclo[2.2.1]hept-2-ene) base having features of high transparency, high heat resistance and low absorption property have been paid attention.

Further, an addition polymer of norbornene (bicyclo[2.2.1]hept-2-ene) and a cycloolefin having a hydrolyzable silyl group, and its crosslinked product have been proposed as transparent resins having, in addition to the above features, small linear expansion coefficient, excellent thermal dimensional stability, chemical resistance and excellent adhesion property to other parts (patent documents 1 to 7).

In the above techniques, a norbornene (bicyclo[2.2.1]hept-2-ene) addition homopolymer and an addition copolymer of norbornene and another cycloolefin have been often employed, but unless a molecular weight modifier is present in the polymerization system, these addition polymers formed from cycloolefin compounds containing norbornene frequently become high-molecular weight and have a number-average molecular weight of not less than 300,000. As a result, the polymers are markedly thickened or solidified during the polymerization, and it sometimes becomes difficult to industrially produce the polymers. Even if a polymer is produced, solution viscosity of the polymer becomes too high, and difficulties sometimes arise in processing of the polymer into a film or a sheet by casting method. On the other hand, if the molecular weight is too low, a film or a sheet obtained by molding the polymer has low mechanical strength or poor toughness and becomes a brittle material, and this causes a problem when the molded product is used. On this account, the addition polymer used as a substitute for the inorganic glass needs to be controlled to have a molecular weight of a given range.

Polymers containing norbornene differ from one another in molecular weight, configuration of the resulting structural units derived from norbornene and degree of branching depending upon a catalyst used in the polymerization, and as a result, they differ from one another in solubility in various solvents. Catalysts containing compounds of transition metals, such as titanium, zirconium, nickel, cobalt, chromium and palladium, all can be polymerization catalysts for norbornene, and of these, a multicomponent catalyst containing palladium is generally well known as a catalyst having high polymerization activity and facilitating copolymerization with a polar cycloolefin compound. For example, as a polymerization catalyst for a norbornene-based monomer, a catalyst constituted of palladium compound/trivalent phosphine compound/ionic boron compound/organoaluminum compound is described in a patent document 8, a patent document 9 and the like.

As methods for controlling a molecular weight of a cycloolefin addition polymer prepared using a palladium compound as a catalyst, there are known:
(1) a method of selecting a type of a catalyst (see patent document 10, non-patent documents 1 and 2),
(2) a method of increasing a catalytic amount to lower a molecular weight (see non-patent document 3),
(3) a method of using an α-olefin compound as a molecular weight modifier (also referred to as a "chain transfer agent") (see patent documents 11 and 12, non-patent documents 4 and 5),
(4) a method of using cyclopentene as a molecular weight modifier (see patent document 13),
(5) a method of using ethylene as a molecular weight modifier (see non-patent document 6),
(6) a method of using water as a molecular weight modifier (see non-patent document 7),
(7) a method of using isopropanol as a molecular weight modifier (see non-patent document 8), and
(8) a method of using hydrogen as a molecular weight modifier (see patent document 14).

In the methods (1) and (2), however, the amount of the catalyst used is large, and much energy is required to remove the catalyst from the resulting polymer, and these become industrial problems. The method (3) is based on a mechanism wherein the α-olefin is inserted into a polymer chain end and thereafter the molecular weight is controlled by β-elimination. This method is effective for a case of using a nickel catalyst, but in case of using a palladium catalyst, the effect is low and a large amount of a molecular weight modifier is necessary. Also in the method (4), a large amount of a molecular weight modifier is necessary and the molecular weight control effect is low. The method (5) is to perform polymerization using a large amount of a [Pd(CH₃CN)₄] [BF₄]₂ catalyst that is a specific single complex, and in this method, further, an ethylene pressure needs to be increased. In the methods (6) and (7), polymerization activity is lowered if the amount of a molecular weight modifier is increased. In the method (8), it is described that it is necessary to use a hydrogen gas that is difficult to handle, and besides, the molecular weight control effect itself is not clear.

In a patent document 15, it is disclosed in Comparative Examples A, B, C and E that norbornene (bicyclo[2.2.1]hept-2-ene) is polymerized in the presence of a catalyst using a palladium compound having triphenylphosphine or 2,2'-bipyridyl as a ligand or an ethyl hexanoate compound of palladium in the presence of ethylene, but polynorbornene obtained in this process is not always dissolved in a hydrocarbon solvent.

In a non-patent document 9, regarding the molecular weight control effect exerted by a specific palladium catalyst having a phosphine compound coordinated to a palladium atom, a molecular weight can be controlled by applying a large amount of 1-hexene when P(o-tolyl)3 is used as a ligand is described. In a patent document 16, it is described that when a palladium compound having a ligand that is coordinated in the form of a chelate with an atom selected from P, O and N is used, ethylene undergoes addition copolymerization with a cycloolefin.

Also in these processes, however, a method for controlling a molecular weight wherein copolymerization with a cycloolefin compound having a polar group is possible, the amounts of a catalyst and a molecular weight modifier added are small and polymerization activity is not lowered has not been found yet, and development of such a method has been desired.

Under such circumstances as described above, the present inventors have earnestly studied a relationship between a ligand of a palladium catalyst and an α-olefin as a molecular weight modifier, and as a result, they have found that by using a multicomponent palladium catalyst containing phosphine having a substituent of a specific cone angle or its phosphonium salt and by using ethylene as a molecular weight modifier, a cycloolefin addition polymer having a number-average molecular weight of 10,000 to 200,000 can be readily prepared using a small amount of the catalyst. Based on the finding, the present invention has been accomplished.
Patent document 1: U.S. Patent No. 5,912,313
Patent document 2: U.S. Patent No. 6,031,058
Patent document 3: U.S. Patent No. 6,455,650
Patent document 4: Japanese Patent Laid-Open Publication No. 327024/2002
Patent document 5: Japanese Patent Laid-Open Publication No. 160620/2003
Patent document 6: Japanese Patent Laid-Open Publication No. 327024/2002
Patent document 7: Japanese Patent Laid-Open Publication No. 48918/2003
Patent document 8: U.S. Patent No. 6,455,650
Patent document 9: Japanese Patent Laid-Open Publication No. 262821/1993
Patent document 10: U.S. Patent No. 3,330,815
Patent document 11: National Publication of International Patent No. 508649/1997
Patent document 12: U.S. Patent No. 6,455,650
Patent document 13: U.S. Patent No. 6,455,650
Patent document 14: Japanese Patent Laid-Open Publication No. 262821/1993
Patent document 15: WO98/56839
Patent document 16: WO98/56839
Non-patent document 1: Macromolecules 1996, 2755-2763
Non-patent document 2: Macromol. Rapid Commun. 17, 173-180 (1996)
Non-patent document 3: Macromol. Symp. 89, 433-442 (1995)
Non-patent document 4: Macromolecules 2002, 35, 8969-8977
Non-patent document 5: J. Polymer Sci. A, Polym. Chem., 40, 3604-3614 (2002)
Non-patent document 6: Macromol. Rapid Commun. 18, 689-697 (1997)
Non-patent document 7: Macromol. Symp. 89, 433-442 (1995)
Non-patent document 8: Organometallics, 2001, 20, 2802-2812
Non-patent document 9: John Lipian, et al. Macromolecules, 2002, 35, 8969-8977

### DISCLOSURE OF THE INVENTION

### PROBLEMS TO BE SOLVED BY THE INVENTION

It is an object of the present invention to provide a process for preparing a cycloolefin addition polymer which is excellent in heat resistance, optical transparency and adhesion property to other parts, has a molecular weight having been controlled so as to be readily molded into a film or a sheet by solution casting and is soluble in a solvent selected from hydrocarbon solvents and halogenated hydrocarbon solvents. It is another object of the present invention to provide a process for preparing the above-mentioned cycloolefin addition polymer, in which amounts of a catalyst and a molecular weight modifier used are small and polymerization activity is high.

### MEANS TO SOLVE PROBLEMS

The process for preparing a cycloolefin addition polymer according to the present invention comprises addition-polymerizing monomers containing a cycloolefin compound represented by the following formula
(1) in the presence of:
   a multicomponent catalyst comprising:
      (a) a palladium compound,
      (b) a compound selected from an ionic boron compound, an ionic aluminum compound, a Lewis acidic aluminum compound and a Lewis acidic boron compound, and
      (c) a phosphine compound having a substituent selected from an alkyl group, a cycloalkyl group, and an aryl group of 3 to 15 carbon atoms, and having a cone angle (θ deg) of 170 to 200, or its phosphonium salt, and ethylene;

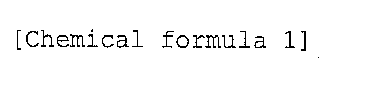

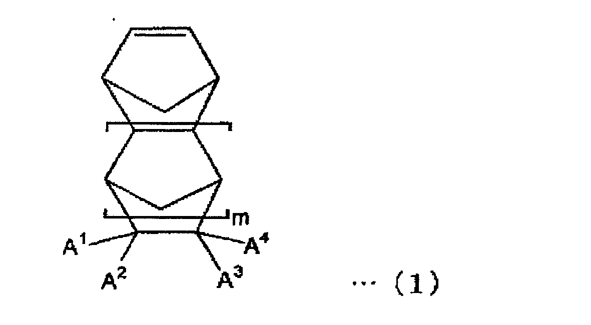

wherein A¹ to A⁴ are each independently a hydrogen atom, an alkyl group, a cycloalkyl group, an aryl group, an ester group, an alkoxy group or a trialkylsilyl group of 1 to 15 carbon atoms, or a hydroxyl group; and may be each bonded to a ring structure through an alkylene group of 1 to 20 carbon atoms or a linkage of 0 to 10 carbon atoms containing at least one atom selected from an oxygen atom, a nitrogen atom and a sulfur atom, A¹ and A² may together form an alkylidene group of 1 to 5 carbon atoms, a substituted or unsubstituted alicyclic or aromatic ring of 5 to 20 carbon atoms or a heterocyclic ring of 2 to 20 carbon atoms, A¹ and A³ may together form a substituted or unsubstituted alicyclic or aromatic ring of 5 to 20 carbon atoms or a heterocyclic ring of 2 to 20 carbon atoms, and m is 0 or 1.
In the process for preparing a cycloolefin addition polymer according to the invention, the multicomponent catalyst preferably comprises:
(a) a palladium compound,
(b) a compound selected from an ionic boron compound, an ionic aluminum compound, a Lewis acidic aluminum compound and a Lewis acidic boron compound,
(c) a phosphine compound having a substituent selected from an alkyl group, a cycloalkyl group, and an aryl group of 3 to 15 carbon atoms, and having a cone angle (θ deg) of 170 to 200, or its phosphonium salt,
   and additionally
(d) an organoaluminum compound.

In the process for preparing a cycloolefin addition polymer according to the invention, monomers containing 70 to 98% by mol of the cycloolefin compound represented by the formula (1) and 2 to 30% by mol of a cycloolefin compound having an alkoxysilyl group and represented by the following formula (2)-1 and/or the following formula (2)-2 are preferably addition-polymerized;

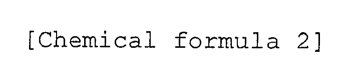

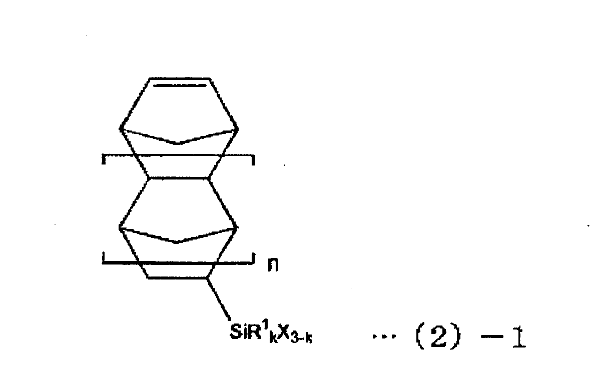

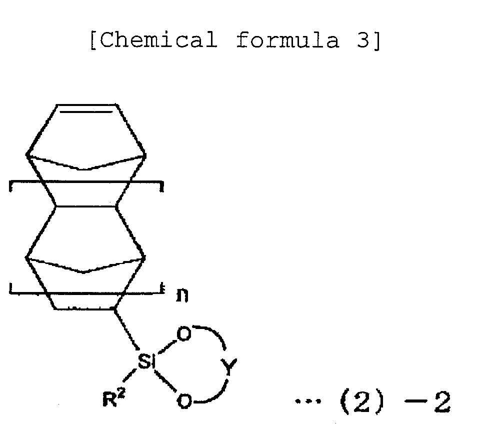

wherein R¹ and R² are each a substituent selected from an alkyl group, a cycloalkyl group and an aryl group of 1 to 10 carbon atoms, and a halogen atom,
X is an alkoxy group of 1 to 5 carbon atoms,
Y is a residue of a hydroxyl group of an aliphatic diol of 2 to 4 carbon atoms,
k is an integer of 0 to 2, and
n is 0 or 1.
In the process for preparing a cycloolefin addition polymer according to the invention, the palladium compound (a) is preferably an organic carboxylic acid salt of palladium or a β-diketone compound of palladium.

In the process for preparing a cycloolefin addition polymer according to the invention, the amount of ethylene used in the addition polymerization is preferably in the range of 0.1 to 5.0% by mol based on all the monomers.

In the process for preparing a cycloolefin addition polymer according to the invention, monomers containing bicyclo[2.2.1]hept-2-ene in an amount of not less than 80% by mol in all the monomers are preferably addition-polymerized in the presence of a polymerization solvent containing an alicyclic hydrocarbon solvent in an amount of at least 50% by weight.

### EFFECT OF THE INVENTION

According to the present invention, a cycloolefin compound is addition-polymerized using a specific palladium catalyst and using ethylene as a molecular weight modifier, whereby a cycloolefin addition polymer having a molecular weight preferable for a sheet or a film used for an optical material can be prepared using small amounts of the molecular weight modifier and the palladium catalyst.

In the process for preparing a cycloolefin addition polymer according to the invention, a specific catalyst system is used, and therefore, even in case of a cycloolefin addition polymer containing a methoxysilyl group having high reactivity, crosslinking or gelation accompanying a side reaction attributable to the methoxysilyl group can be inhibited, and during the polymerization or in the subsequent molding process, undesirable change of solubility, increase of molecular weight, curing, etc. can be inhibited.

### BEST MODE FOR CARRYING OUT THE INVENTION

The present invention is described in detail hereinafter.

In the process for preparing a cycloolefin addition polymer according to the invention, addition polymerization of a cycloolefin compound is carried out using a specific multicomponent catalyst containing a palladium compound and using ethylene as a molecular weight modifier.

### Multicomponent catalyst

The multicomponent catalyst for use in the invention is prepared from:
(a) a palladium compound,
(b) a compound selected from an ionic boron compound, an ionic aluminum compound, a Lewis acidic aluminum compound and a Lewis acidic boron compound,
(c) a phosphine compound having a substituent selected from an alkyl group, a cycloalkyl group, and an aryl group of 3 to 15 carbon atoms, and having a cone angle (θ deg) of 170 to 200, or its phosphonium salt,
   and if necessary
(d) an organoaluminum compound.

The above catalyst components are described below.

### (a) Palladium compound

Examples of the palladium compounds (a) include organic carboxylic acid salts of palladium, organic phosphorous acid salts thereof, organic phosphoric acid salts thereof, organic sulfonic acid salts thereof, β-diketone compounds thereof and halides thereof. Of these, preferable are organic carboxylic acid salts of palladium and β-diketone compounds of palladium because they are readily dissolved in hydrocarbon solvents and have high polymerization activity.

Particular examples of such compounds include organic carboxylic acid salts of palladium, such as acetic acid salt of palladium, propionic acid salt thereof, maleic acid salt thereof, fumaric acid salt thereof, butyric acid salt thereof, adipic acid salt thereof, 2-ethylhexanoic acid salt thereof, naphthenic acid salt thereof, oleic acid salt thereof, dodecanoic acid salt thereof, neodecanoic acid salt thereof, 1,2-cyclohexanedicarboxylic acid salt thereof, 5-norbornene-2-carboxylic acid salt thereof, benzoic acid salt thereof, phthalic acid salt thereof, terephthalic acid salt thereof and naphthoic acid salt thereof; complexes of organic carboxylic acids of palladium, such as triphenylphosphine complex of palladium acetate, tri(m-tolyl)phosphine complex of palladium acetate and tricyclohexylphosphine complex of palladium acetate; phosphorous acid salts and phosphoric acid salts of palladium, such as dibutylphosphorous acid salt of palladium, dibutylphosphoric acid salt thereof, dioctylphosphoric acid salt thereof and phosphoric acid dibutyl ester salt thereof; organic sulfonic acid salts of palladium, such as dodecylbenzenesulfonic acid salt of palladium and p-toluenesulfonic acid salt thereof; β-diketone compounds of palladium, such as bis(acetylacetonato)palladium, bis(hexafluoroacetylacetonato)palladium, bis(ethylacetoacetonato)palladium and bis(phenylacetoacetato)palladium; and halide complexes of palladium, such as dichlorobis(triphenylphosphine)palladium, dichlorobis[tri(m-tolylphosphine)]palladium, dibromobis[tri(m-tolylphosphine)]palladium, dichlorobis[tri(m-xylylphosphine)]palladium, dibromobis[tri(m-xylylphosphine)]palladium, imidazole complex represented by [C₃H₅N₂]₂[PdCl₄] and acetonyltriphenylphosphonium complex represented by [Ph₃PCH₂C(O)CH₃]₂[Pd₂Cl₆]. Further, zero-valent palladium compounds which form aryl or allyl palladium halides in combination with halogenated compounds, such as aryl chloride, benzyl chloride, bromobenzene, chlorobenzene and bromonaphthalene, in the presence of the following phosphine compound (c) are also employable, and examples of such palladium compounds include dibenzylideneacetone palladium [Pd₂(dba)₃] and tetra[triphenylphosphine]palladium [Pd(P(Ph)₃)₄].

### (b) Compound selected from ionic boron compound, ionic aluminum compound, Lewis acidic aluminum compound and Lewis acidic boron compound

Examples of the ionic boron compounds include triphenylcarbenium tetrakis(pentafluorophenyl)borate, triphenylcarbenium tetrakis[3,5-bis(trifluoromethyl)phenyl]borate, triphenylcarbenium tetrakis(2,4,6-trifluorophenyl)borate, triphenylcarbenium tetraphenylborate, tributylammonium tetrakis(pentafluorophenyl)borate, N,N-dimethylanilinium tetrakis(pentafluorophenyl)borate, N,N-diethylanilinium tetrakis(pentafluorophenyl)borate, N,N-diphenylanilinium tetrakis(pentafluorophenyl)borate and lithium tetrakis(pentafluorophenyl)borate.

Examples of the ionic aluminum compounds include triphenylcarbenium tetrakis(pentafluorophenyl)aluminate, triphenylcarbenium tetrakis[3,5-bis(trifluoromethyl)phenyl]aluminate, triphenylcarbenium tetrakis(2,4,6-trifluorophenyl)aluminate and triphenylcarbenium tetraphenylaluminate.

Examples of the Lewis acidic aluminum compounds include aluminum trifluoride ether complex, ethyldifluoroaluminum, ethoxydifluoroaluminum, tris(pentafluorophenyl)aluminum, tris(3,5-difluorophenyl)aluminum and tris(3,5-ditrifluoromethylphenyl)aluminum.

Examples of the Lewis acidic boron compounds include tris(pentafluorophenyl)boron, tris(3,5-difluorophenyl)boron, tris(3,5-ditrifluromethylphenyl)boron and boron trifluoride ether complex.
Of the above compounds, an ionic boron compound is most preferable from the viewpoint of polymerization activity.

### (c) Phosphine compound, phosphonium salt

The phosphine compound or the phosphonium salt employable as a catalyst component of the multicomponent catalyst in the invention is a phosphine compound having a substituent selected from an alkyl group, a cycloalkyl group, and an aryl group of 3 to 15 carbon atoms, and having a cone angle (θ deg) of 170 to 200, or its phosphonium salt.

In the present invention, it is an important technical requirement to use the above specific phosphine compound or phosphonium salt. If another phosphine compound or phosphonium salt is used, the resulting cycloolefin addition polymer becomes extremely high-molecular weight, and thereby a polymer solution sometimes becomes in a swollen solid state or the polymer is sometimes precipitated. In such a case, molding into a film, a sheet or a thin film by casting is difficult.

The phosphine compound for use in the invention is a trivalent electron donative phosphorus compound (tertiary phosphine compound) having an alkyl group, a cycloalkyl group or an aryl group as a substituent. The cone angle (θ deg) of the tertiary phosphine compound has been calculated by C.A. Tolman (Chem. Rev. Vol. 77, 313 (1977)) and is a circular cone angel θ measured regarding a model which is formed from a metal atom, a phosphorus atom and three substituents on the phosphorus atom and in which the bond distance between the metal atom and the phosphorus atom is 2.28 Å.

Examples of the phosphine compounds having a cone angle (θ deg) of 170 to 200 employable in the invention include tricyclohexylphosphine, di-t-butylphenylphosphine, trineopentylphosphine, tri(t-butyl)phosphine, tris(pentafluorophenyl)phosphine and tri(o-tolyl)phosphine. Also employable are di-t-butyl-2-biphenylphosphine, di-t-butyl-2'-dimethylamino-2-biphenylphosphine, dicyclohexyl-2-biphenylphosphine and dicyclohexyl-2'-i-propyl-2-biphenylphosphine.

Examples of the phosphonium salts having a cone angle (θ deg) of 170 to 200 employable in the invention include:
tricyclohexylphosphonium
   tetrakis(pentafluorophenyl)borate,
tri-t-butylphosphonium tetrakis(pentafluorophenyl)borate,
tricyclohexylphosphonium tetrafluoroborate,
tricyclohexylphosphonium octanoate,
tricyclohexylphosphonium acetate,
tricyclohexylphosphonium trifluoromethanesulfonate,
tri-t-butylphosphonium trifluoromethanesulfonate,
tricyclohexylphosphonium p-toluenesulfonate,
tricyclohexylphosphonium hexafluoroacetylacetonate,
tricyclohexylphosphonium hexafluoroantimonate, and
tricyclohexylphosphonium hexafluorophosphonate.

### (d) Organoaluminum compound

Examples of the organoaluminum compounds (d) preferably used in the invention include alkylalumoxane compounds, such as methylalumoxane, ethylalumoxane and butylalumoxane; alkylaluminum compounds and alkylaluminum halide compounds, such as trimethylaluminum, triethylaluminum, triisobutylaluminum, diisobutylaluminum hydride, diethylaluminum chloride, diethylaluminum fluoride, ethylaluminum sesquichloride and ethylaluminum dichloride; and mixtures of the alkylalumoxane compounds and the alkylaluminum compounds.

### Multicomponent catalyst

In the present invention, the catalyst components (a), (b) and (c) and the optionally added catalyst component (d) for the multicomponent catalyst are preferably used in the following amounts.

The palladium compound (a) is used in an amount of 0.001 to 0.05 mmol (in terms of Pd atom), preferably 0.0015 to 0.01 mmol (in terms of Pd atom), based on 1 mol of the monomers. Especially in the case where an organic carboxylic acid salt of palladium or a β-diketone compound of palladium is used as the palladium compound, addition polymerization can be carried out by using the palladium compound in an amount of 0.001 to 0.01 mmol (in terms of Pd atom) based on 1 mol of the monomers.

The compound (b) such as an ionic boron compound is used in an amount of 0.1 to 20 mol, preferably 0.5 to 3.0 mol, based on one mol of Pd atom of the palladium compound (a).

The specific phosphine compound or its phosphonium salt (c) is used in an amount of 0.05 to 5 mol, preferably 0.1 to 2.0 mol, based on one mol of Pd atom of the palladium compound (a).

The organoaluminum compound (d) is used when needed, and by the use of the organoaluminum compound (d), polymerization activity is enhanced and resistance of the catalyst system to impurities such as oxygen is increased. When the multicomponent catalyst contains the organoaluminum compound (d), the amount of the organoaluminum compound (d) used is in the range of 0.1 to 100 mol, preferably 1.0 to 10 mol, based on one mol of Pd atom of the palladium compound (a).

In the present invention, the multicomponent catalyst comprising the above components has only to be present in the polymerization system, and there is no specific limitation on the preparation of the catalyst, such as order of addition of the catalyst components, and the usage of the catalyst, but there can be mentioned, for example, the following processes (1) to (3).
(1) A process wherein a catalyst, which has been prepared in advance by mixing the components and aging the mixture at 0 to 80°C for 1 to 200 minutes, is added to a mixture of a polymerization solvent and monomers.
(2) A process wherein to a mixture of a polymerization solvent and monomers, the palladium compound (a), the specific phosphine compound or its phosphonium salt (c), the compound (b) selected from an ionic boron compound and other compounds and the organoaluminum compound (d) that is used when needed are added in this order.
(3) A process wherein to a mixture of a polymerization solvent and monomers, the palladium compound (a), the compound (b) selected from an ionic boron compound and other compounds, the specific phosphine compound or its phosphonium salt (c) and the organoaluminum compound (d) that is used when needed are added in this order.

### Molecular weight modifier

In the present invention, control of a molecular weight of the resulting cycloolefin addition polymer is carried out by adding ethylene as a molecular weight modifier into the polymerization system. As the amount of ethylene added is increased, the molecular weight of the resulting cycloolefin addition polymer is lowered.

Ethylene can be added into the polymerization system usually under such conditions that the pressure at 25°C becomes 0.1 to 5 MPa, and in the case where the resulting cycloolefin polymer is used to prepare a molded product such as a film or a sheet, ethylene is used in an amount of usually 0.05 to 15% by mol, preferably 0.1 to 5.0% by mol, more preferably 0.5 to 2.0% by mol, based on all the monomers.

For the control of a molecular weight of the cycloolefin addition polymer in the invention, ethylene specifically exerts an effect, and in case of other α-olefins or hydrogen, the molecular weight control effect is low or almost nil. In the process for preparing a cycloolefin addition polymer according to the invention, ethylene does not act as a monomer for the addition polymerization.

### Monomer

In the process for preparing a cycloolefin addition polymer according to the invention, the cycloolefin compound represented by the following formula (1) is used as a monomer (referred to as a "specific monomer (1)" hereinafter).

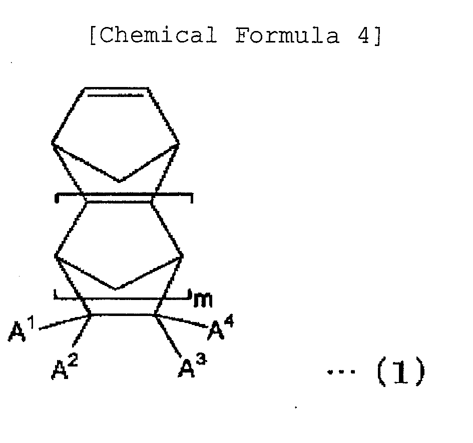

In the formula (1), A¹ to A⁴ are each independently a hydrogen atom, an alkyl group, a cycloalkyl group, an aryl group, an ester group, an alkoxy group or a trialkylsilyl group of 1 to 15 carbon atoms, or a hydroxyl group; and may be each bonded to a ring structure through an alkylene group of 1 to 20 carbon atoms or a linkage of 0 to 10 carbon atoms containing at least one atom selected from an oxygen atom, a nitrogen atom and a sulfur atom, A¹ and A² may together form an alkylidene group of 1 to 5 carbon atoms, a substituted or unsubstituted alicyclic or aromatic ring of 5 to 20 carbon atoms or a heterocyclic ring of 2 to 20 carbon atoms, A¹ and A³ may together form a substituted or unsubstituted alicyclic or aromatic ring of 5 to 20 carbon atoms or a heterocyclic ring of 2 to 20 carbon atoms, and m is 0 or 1.

Examples of the specific monomers (1) include the following compounds, but the invention is not limited to those examples;
bicyclo[2.2.1]hept-2-ene,
5-methylbicyclo[2.2.1]hept-2-ene,
5-ethylbicyclo[2.2.1]hept-2-ene,
5-butylbicyclo[2.2.1]hept-2-ene,
5-hexylbicyclo[2.2.1]hept-2-ene,
5-octylbicyclo[2.2.1]hept-2-ene,
5-decylbicyclo[2.2.1]hept-2-ene,
5,6-dimethylbicyclo[2.2.1]hept-2-ene,
5-methyl-6-ethylbicyclo[2.2.1]hept-2-ene,
5-cyclohexylbicyclo[2.2.1]hept-2-ene,
5-phenylbicyclo[2.2.1]hept-2-ene,
5-benzylbicyclo[2.2.1]hept-2-ene,
5-indanylbicyclo[2.2.1]hept-2-ene,
5-vinylbicyclo[2.2.1]hept-2-ene,
5-vinylidenebicyclo[2.2.1]hept-2-ene,
5-(1-butenyl)bicyclo[2.2.1]hept-2-ene,
5-trimethylsilylbicyclo[2.2.1]hept-2-ene,
5-triethylsilylbicyclo[2.2.1]hept-2-ene,
5-methoxybicyclo[2.2.1]hept-2-ene,
5-ethoxybicyclo[2.2.1]hept-2-ene,
tricyclo[5.2.1.0^{2,6}]dec-8-ene,
3-methyltricyclo[5.2.1.0^{2,6}]dec-8-ene,
tricyclo[5.2.1.0^{2,6}]deca-3,8-diene,
spiro[fluorene-9,4'-tricyclo[5.2.1.0^{2',6'}]dec-8'-ene,
5-methoxycarbonylbicyclo[2.2.1]hept-2-ene,
5-methyl-5-methoxycarbonylbicyclo[2.2.1]hept-2-ene,
5-ethoxycarbonylbicyclo[2.2.1]hept-2-ene,
5-propoxycarbonylbicyclo[2.2.1]hept-2-ene,
5-n-butoxycarbonylbicyclo[2.2.1]hept-2-ene,
5-t-butoxycarbonylbicyclo[2.2.1]hept-2-ene,
9-methyltetracyclo[6.2.1.1^{3,6}.0^{2,7}]dodec-4-ene,
9-ethyltetracyclo[6.2.1.1^{3,6}.0^{2,7}]dodec-4-ene,
9,10-dimethyltetracyclo[6.2.1.1^{3,6}.0^{2,7}]dodec-4-ene,
9-methoxycarbonyltetracyclo[6.2.1.1^{3,6}.0^{2,7}]dodec-4-ene,
9-ethoxycarbonyltetracyclo[6.2.1.1^{3,6}.0^{2,7}]dodec-4-ene,
9-propoxycarbonyltetracyclo[6.2.1.1^{3,6}.0^{2,7}]dodec-4-ene,
9-t-butoxycarbonyltetracyclo[6.2.1.1^{3,6}.0^{2,7}]dodec-4-ene,
9-benzyloxycarbonyltetracyclo[6.2.1.1^{3,6}.0^{2,7}]dodec-4-ene,
9-methyl-9-methoxycarbonyltetracyclo[6.2.1.1^{3,6}.0^{2,7}]dodec-4-ene,
9-methyl-9-ethoxycarbonyltetracyclo[6.2.1.1^{3,6}.0^{2,7}]dodec-4-ene,
9-methyl-9-t-butoxycarbonyltetracyclo[6.2.1.1^{3,6}.0^{2,7}]dodec-4-ene,
N-phenylbicyclo[2.2.1]hept-5-ene-2,3-dicarbonimide,
N-cyclohexylbicyclo[2.2.1]hept-5-ene-2,3-dicarbonimide,
bicyclo[2.2.1]hept-5-ene-2-spiro-3'-exo-cyclohexylsuccinimide, and
bicyclo[2.2.1]hept-5-ene-2-spiro-3'-exo-succinic anhydride.
The above compounds may be used singly or in combination of two or more kinds.

Of the above specific monomers (1), bicyclo[2.2.1]hept-2-ene (norbornene) is preferable, and when norbornene is used in an amount of 20 to 99% by mol, preferably 70 to 97% by mol, in all the monomers, the resulting polymer exhibits excellent mechanical strength, extensibility and toughness. In the present invention, it is preferable to addition-polymerize monomers containing bicyclo[2.2.1]hept-2-ene in an amount of not less than 80% by mol, preferably 80 to 99% by mol.

In the present invention, further, it is preferable to use a monomer represented by the following formula (2)-1 and/or the following formula (2)-2 (referred to as a "specific monomer (2)" hereinafter), and by the use of such a monomer, crosslinkability can be imparted to the resulting cycloolefin addition polymer.

That is to say, by the use of the specific monomer (2), a hydrolyzable silyl group can be introduced into a molecule of the cycloolefin addition polymer, and the hydrolyzable silyl group acts as a crosslinking site due to a siloxane bond. Further, the hydrolyzable silyl group acts also as a site for adhesion to other parts, and therefore, contribution to enhancement of adhesion property of the cycloolefin addition polymer to other parts can be expected.

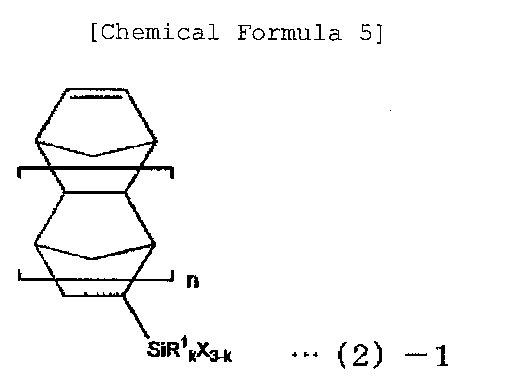

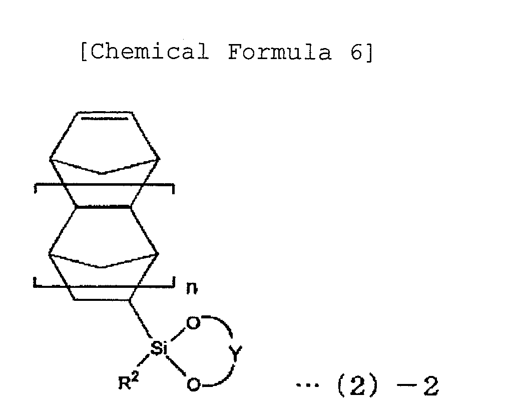

In the formula (2)-1 and the formula (2)-2, R¹ and R² are each a substituent selected from an alkyl group, a cycloalkyl group and an aryl group of 1 to 10 carbon atoms, and a halogen atom,
X is an alkoxy group of 1 to 5 carbon atoms,
Y is a residue of a hydroxyl group of an aliphatic diol of 2 to 4 carbon atoms,
k is an integer of 0 to 2, and
n is 0 or 1.

Examples of the specific monomers (2) represented by the formula (2)-1 include the following compounds, but the invention is not limited to those examples;
5-trimethoxysilyl-bicyclo[2.2.1]hept-2-ene,
5-methyldimethoxysilyl-bicyclo[2.2.1]hept-2-ene,
5-dimethylmethoxysilyl-bicyclo[2.2.1]hept-2-ene,
5-ethyldimethoxysilyl-bicyclo[2.2.1]hept-2-ene,
5-cyclohexyldimethoxysilyl-bicyclo[2.2.1]hept-2-ene,
5-chlorodimethoxysilyl-bicyclo[2.2.1]hept-2-ene,
5-phenyldimethoxysilyl-bicyclo[2.2.1]hept-2-ene,
5-triethoxysilyl-bicyclo[2.2.1]hept-2-ene,
5-methyldiethoxysilyl-bicyclo[2.2.1]hept-2-ene,
5-dimethylethoxysilyl-bicyclo[2.2.1]hept-2-ene,
5-ethyldiethoxysilyl-bicyclo[2.2.1]hept-2-ene,
5-methyldiisopropoxysilyl-bicyclo[2.2.1]hept-2-ene,
5-chlorodiisopropoxysilyl-bicyclo[2.2.1]hept-2-ene,
9-trimethoxysilyl-tetracyclo[6.2.1.1^{3,6}.0^{2,7}]dodec-4-ene,
9-methyldimethoxysilyl-tetracyclo[6.2.1.1^{3,6}.0^{2,7}]dodec-4-ene,
9-ethyldimethoxysilyl-tetracyclo[6.2.1.1^{3,6}.0^{2,7}]dodec-4-ene,
9-cyclohexyldimethoxysilyl-tetracyclo[6.2.1.1^{3,6}.0^{2,7}]dodec-4-ene,
9-phenyldimethoxysilyl-tetracyclo[6.2.1.1^{3,6}.0^{2,7}]dodec-4-ene,
9-dimethylmethoxysilyl-tetracyclo[6.2.1.1^{3,6}.0^{2,7}]dodec-4-ene,
9-triethoxysilyl-tetracyclo[6.2.11^{3,6}.0^{2,7}]dodec-4-ene,
9-methyldiethoxysilyl-tetracyclo[6.2.1.1^{3,6}.0^{2,7}]dodec-4-ene,
9-ethyldiethoxysilyl-tetracyclo[6.2.1.1^{3,6}.0^{2,7}]dodec-4-ene,
9-cyclohexyldiethoxysilyl-tetracyclo[6.2.1.1^{3,6}.0^{2,7}]dodec-4-ene,
9-phenyldiethoxysilyl-tetracyclo[6.2.1.1^{3,6}.0^{2,7}]dodec-4-ene, and
9-dimethylethoxysilyl-tetracyclo[6.2.1.1^{3,6}.0^{2,7}]dodec-4-ene.

Examples of the specific monomers (2) represented by the formula (2)-2 include the following compounds, but the invention is not limited to those examples;
5-[1'-methyl-2',5'-dioxa-1'-silacyclopentyl]-bicyclo[2.2.1]hept-2-ene,
5-[1'-methyl-2',5'-dioxa-3',4'-dimethyl-1'-silacyclopentyl]-bicyclo[2.2.1]hept-2-ene,
5-[1'-phenyl-2',5'-dioxa-1'-silacyclopentyl]-bicyclo[2.2.1]hept-2-ene,
5-[1'-methyl-2',5'-dioxa-1'-silacyclopentyl]-bicyclo[2.2.1]hept-2-ene,
5-[1'-phenyl-2',6'-dioxa-4',4'-dimethyl-1'-silacyclohexyl]-bicyclo[2.2.1]hept-2-ene,
5-[1'-methyl-2',6'-dioxa-4',4'-dimethyl-1'-silacyclohexyl]-bicyclo[2.2.1]hept-2-ene,
5-[1'-methyl-2',6'-dioxa-3',4'-dimethyl-1'-silacyclohexyl]-bicyclo[2.2.1]hept-2-ene, and
5-[1'-methyl-2',7'-dioxa-4',5'-dimethyl-1'-silacycloheptyl]-bicyclo[2.2.1]hept-2-ene.
The above compounds may be used singly or in combination of two or more kinds.

Of the above specific monomers (2), preferable are:
5-trimethoxysilyl-bicyclo[2.2.1]hept-2-ene,
5-triethoxysilyl-bicyclo[2.2.1]hept-2-ene,
5-methyldimethoxysilyl-bicyclo[2.2.1]hept-2-ene,
9-trimethoxysilyl-tetracyclo[6.2.1.1^{3,6}.0^{2,7}]dodec-4-ene,
9-methyldimethoxysilyl-tetracyclo[6.2.1.1^{3,6}.0^{2,7}]dodec-4-ene,
9-triethoxysilyl-tetracyclo[6.2.1.1^{3,6}.0^{2,7}]dodec-4-ene,
5-[1'-methyl-2',6'-dioxa-4',4'-dimethyl-1'-silacyclohexyl]-bicyclo[2.2.1]hept-2-ene, and
5-[1'-methyl-2',6'-dioxa-4'-methyl-1'-silacyclohexyl]-bicyclo[2.2.1]hept-2-ene.

In the case where the specific monomer (2) is used, the amount of the specific monomer (2) used is in the range of 2 to 30% by mol, preferably 5 to 20% by mol, in all the monomers. If the amount of the specific monomer (2) exceeds 30% by mol, problems of lowering of polymerization activity and increase of water absorption of the resulting addition polymer sometimes take place. If the amount of the specific monomer (2) is less than 2% by mol, effects of improving crosslinkability and adhesion property to other parts do not obtained occasionally.

Preparation of cycloolefin addition polymer Addition polymerization
In the preparation process of the invention, the above monomers are addition-polymerized using the multicomponent catalyst comprising the above components in the presence of ethylene which functions as a molecular weight modifier.

The addition polymerization in the invention is carried out usually in a polymerization solvent. As the polymerization solvent, there can be used a solvent or a mixed solvent selected from alicyclic hydrocarbon solvents, such as cyclohexane, cyclopentane and methylcyclopentane, aliphatic hydrocarbon solvents, such as hexane, heptane and octane, aromatic hydrocarbon solvents, such as toluene, benzene, xylene and mesitylene, and halogenated hydrocarbon solvents, such as dichloromethane, 1,2-dichloroethane, 1,1-dichloroethane, tetrachloroethane, chlorobenzene and dichlorobenzene.

By the use of a polymerization solvent containing at least 50% by weight of an alicyclic hydrocarbon solvent of the above solvents in the invention, the cycloolefin addition polymer is homogeneously dissolved in the solvent and polymerization can be promoted even if structural units derived from bicyclo[2.2.1]hept-2-ene are contained in amounts of not less than 90% by mol in all the structural units in the cycloolefin addition polymer. Accordingly, in the case where a polymerization solution containing at least 50% by weight, preferably 70% by weight, of an alicyclic hydrocarbon solvent is used, monomers containing bicyclo[2.2.1]hept-2-ene in an amount of not less than 50% by mol, preferably not less than 80% by mol, more preferably 80 to 99% by mol, can be preferably addition-polymerized in the invention.

The addition polymerization in the invention is desirably carried out at a temperature of usually -20 to 120°C, preferably 20 to 100°C.

In the present invention, water content in the polymerization solvent is preferably low, and if the water content is usually not more than 400 ppm, troubles rarely arise. In this connection, when the water content in the polymerization solvent is in the range of 100 to 400 ppm, a molecular weight distribution of the resulting cycloolefin addition polymer becomes sharp though polymerization activity is sometimes slightly lowered, and therefore, depending upon the desired properties and use application, the above conditions are sometimes selected intentionally. However, a water content exceeding 400 ppm is undesirable because polymerization activity is markedly lowered.

In the present invention, by subjecting the specific monomer (1) to addition polymerization, a structural unit represented by the following formula (3) is formed. The structural unit represented by the formula (3) may be also formed by hydrogenating the resulting polymer in the following manner after the addition polymerization.

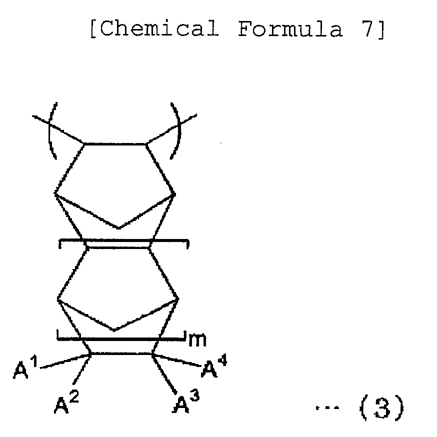

In the formula (3), A¹ to A⁴ and m have the same meanings as in the formula (1).
In the case where the monomers contain the specific monomer (2)-1 and/or (2)-2, the specific monomer (1) and the specific monomer (2) are subjected to addition polymerization, and thereby a structural unit represented by the formula (4)-1 or (4)-2 is formed in addition to the structural unit represented by the formula (3).

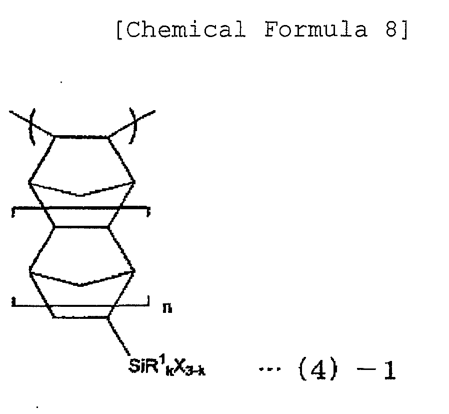

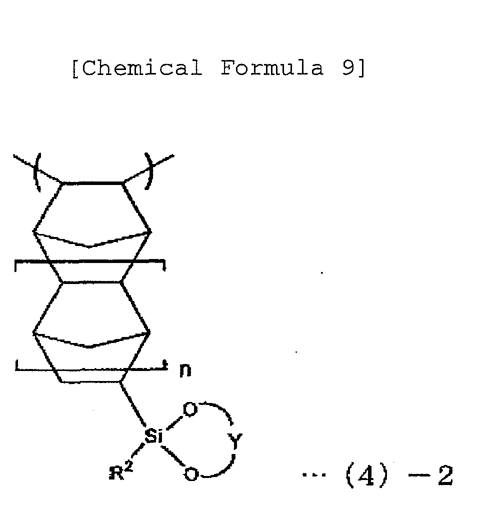

In the formula (4)-1 and the formula (4)-2, R¹, R², X, Y, k and n have the same meanings as in the formula (2)-1 and the formula (2)-2.

### Hydrogenation

In the case where a specific monomer (1) containing an olefinically unsaturated bond in its side chain substituent is used in the addition polymerization, the resulting polymer contains olefinically unsaturated bonds, so that the polymer has poor stability to heat or light and problems of gelation and coloring sometimes take place. On this account, it is preferable to hydrogenate not less than 90%, preferably not less than 95%, more preferably not less than 99%, of the olefinically unsaturated bonds of the polymer.

The hydrogenation method is not specifically restricted, and any method is employable provided that the olefinically unsaturated bonds can be efficiently hydrogenated. In general, the hydrogenation is carried out in an inert solvent in the presence of a hydrogenation catalyst at a hydrogen pressure of 0.5 to 15 MPa and a reaction temperature of 0 to 200°C.

The inert solvent for use in the hydrogenation is selected from aliphatic hydrocarbons of 5 to 14 carbon atoms, such as hexane, heptane, octane and dodecane, alicyclic hydrocarbons of 5 to 14 carbon atoms, such as cyclohexane, cycloheptane, cyclodecane and methylcyclohexane, and aromatic hydrocarbons of 6 to 14 carbon atoms, such as benzene, toluene, xylene and ethylbenzene, and is desirably a solvent capable of dissolving the polymer.

As the hydrogenation catalyst, a heterogeneous catalyst in which a Group VIII metal such as nickel, palladium, platinum, cobalt, ruthenium or rhodium, or compound thereof, is supported on a porous carrier, such as carbon, alumina, silica, silica-alumina or diatomaceous earth, or a homogeneous catalyst, such as a combination of an organic carboxylic acid salt of Group IV to Group VIII metal (e.g., cobalt, nickel, palladium) or a β-diketone compound thereof and organoaluminum or organolithium, or a complex of ruthenium, rhodium, iridium or the like is employable.

In the case where an aromatic group is present in the polymer molecule, hydrogenation does not necessarily have to be carried out because the aromatic group is relatively stable to heat or light. The aromatic group sometimes exerts great influence on the optical properties of a polymer, so that depending upon the desired properties, it is necessary to select such conditions that the aromatic group is not substantially hydrogenated.

### Removal of catalyst

In the preparation process of the invention, the catalyst used for the polymerization reaction and the catalyst used for the hydrogenation reaction that is carried out when necessary are removed in the catalyst removal step. The method applied to the catalyst removal step is not specifically restricted and is properly selected according to the properties or the form of the catalyst used.

In case of a heterogeneous catalyst such as a supported catalyst, there can be mentioned, for example, filtration using a filter and adsorption filtration using an adsorbent such as diatomaceous earth, silica, alumina or activated carbon. In case of a homogeneous catalyst using an organometallic compound, there can be mentioned, for example, removal by an ion-exchange resin, filtration using a zeta-filter, a method wherein an aqueous solution of an organic substance having a function of forming a chelate together with metals contained in the catalyst, e.g., a carboxylic acid compound, an amine compound, an amino alcohol compound or a phosphine compound, is added to the reaction solution to perform extraction and separation, and a method wherein the reaction solution is mixed with a solvent (poor solvent) capable of precipitating a polymer, such as alcohol (e.g., ethanol, propanol) or ketone (e.g., acetone, methyl ethyl ketone), to perform solidification and removal. As a matter of course, a combination of two or more of the above methods may be applied, or a method other than the above methods may be applied.

In the preparation process of the invention, by taking the catalyst removal step, a concentration of residual metals derived from the catalyst contained in the resulting cycloolefin addition polymer can be decreased. As a matter of course, the residual metal concentration is preferably as low as possible, and the concentration of each metal is usually not more than 10 ppm, preferably not more than 5 ppm, more preferably not more than 1 ppm.

In the preparation process of the invention, the cycloolefin addition polymer prepared through the steps of polymerization, removal of catalyst, etc. can be recovered by a publicly known method, such as a method of directly removing a solvent from a solution containing the polymer by means of heating, pressure reduction or the like, or a method of mixing a solution containing the polymer with a poor solvent for the polymer such as alcohol or ketone to perform solidification and separation of the polymer. It is also possible that the polymer solution is used as it is as a raw material and is molded into a film or a sheet by casting method.

### Cycloolefin addition polymer

The glass transition temperature of the cycloolefin addition polymer obtained by the process of the invention is determined as a peak temperature of temperature dispersion of Tan δ that is measured as dynamic viscoelasticity (storage elastic modulus: E', loss elastic modulus: E", Tan δ = E"/E'), and is in the range of usually 200 to 450°C, preferably 250 to 400°C, more preferably 300 to 380°C.

If the glass transition temperature is lower than 200°C, the polymer has poor heat resistance. If the glass transition temperature exceeds 450°C, the polymer becomes rigid and is liable to suffer cracking though its linear expansion coefficient is decreased.

The cycloolefin addition polymer prepared by the process of the invention can be dissolved in a solvent or a mixed solvent selected from aromatic hydrocarbon compounds, such as toluene, benzene, xylene, ethylbenzene and trimethylbenzene, alicyclic hydrocarbon compounds, such as cyclopentane, methylcyclopentane, cyclohexane, methylcyclohexane, dimethylcyclohexane, ethylcyclohexane, cycloheptane, tetralin and decalin, aliphatic hydrocarbon compounds, such as hexane, heptane, octane, decane and dodecane, and halogenated hydrocarbon compounds, such as methylene chloride, 1,2-dichloroethylene, tetrachloroethylene, chlorobenzene and dichlorobenzene, though it depends upon the type of the monomers used. Further, ethers, such as tetrahydrofuran, methyltetrahydrofuran, methoxytetrahydrofuran, anisole, methyl-t-butyl ether, diphenyl ether, dibutyl ether and diethyl ether, and esters, such as ethyl acetate, butyl acetate, butyl benzoate, cyclohexyl benzoate and dicyclohexyl phthalate, etc. can be used in combination, when necessary.

The cycloolefin addition polymer obtained by the preparation process of the invention can be molded into a film, a sheet, a thin film or the like by means of casting method using the above solvent.

The molecular weight of the cycloolefin addition polymer prepared by the process of the invention is defined according to the desired properties and use application and is not defined indiscriminately, but the number-average molecular weight (Mn) in terms of polystyrene, as measured by gel permeation chromatography at 120°C using o-dichlorobenzene as a solvent, is in the range of usually 10,000 to 200,000, preferably 30,000 to 150,000, and the weight-average molecular weight (Mw) is in the range of usually 30,000 to 500,000, preferably 100,000 to 300,000.

If the polymer has a number-average molecular weight (Mn) of less than 10,000 and a weight-average molecular weight (Mw) of less than 30,000, a film or a sheet of the polymer is liable to suffer cracking. If the polymer has a number-average molecular weight (Mn) of more than 200,000 and a weight-average molecular weight (Mw) of more than 500,000, solution viscosity of the polymer becomes too high and handling of the polymer sometimes becomes difficult in the preparation of a film or a sheet by casting method.

### Crosslinked product

The cycloolefin addition polymer containing the structural unit (4)-1 or (4)-2 (referred to as a "silyl group-containing polymer" hereinafter), which is obtained by the preparation process of the invention, has a hydrolyzable silyl group as a side chain substituent, and therefore, by subjecting the polymer to hydrolysis and condensation in the presence of an acid, a product having been crosslinked with a siloxane bond can be obtained. When such a crosslinked product is used to form a film or a sheet, a linear expansion coefficient of the film or the sheet is markedly decreased, and the film or the sheet exhibits excellent solvent resistance, chemical resistance and liquid crystal resistance.

In the present invention, the crosslinked product can be obtained by adding a compound (acid generator) capable of generating an acid by the action of light or heat to a solution of the silyl group-containing polymer, then subjecting the solution to casting method to form a film or a sheet and subjecting the film or the sheet to irradiation with light or heat treatment to generate an acid and thereby promote crosslinking.

As the acid generator for use in the invention, a compound selected from the group consisting of the following compounds (1), (2) and (3) is employable, and at least one compound selected from those compounds is preferably used in an amount of 0.001 to 5 parts by weight based on 100 parts by weight of the silyl group-containing polymer.
(1) Compounds capable of generating an acid by irradiation with light, e.g., an onium salt, which is diazonium salt, ammonium salt, iodonium salt, sulfonium salt, or phosphonium salt having no substituent or alkyl group, aryl group or heterocyclic group, and having, as a counter anion, sulfonate, borate, phosphate, antimonate or carboxylate; a halogenated organic compound, such as halogen-containing oxadiazole, a halogen-containing triazine compound, a halogen-containing acetophenone compound or a halogen-containing benzophenone compound; a quinonediazide compound, such as 1,2-benzoquinonediazido-4-sulfonic acid ester or 1,2-naphthoquinonediazido-4-sulfonic acid ester; and a diazomethane compound, such as α, α'-bis(sulfonyl)diazomethane or α-carbonyl-α'-sulfonyldiazomethane.
(2) Compounds capable of generating an acid by heating to not lower than 50°C, such as aromatic sulfonium salt, aromatic ammonium salt, aromatic pyridinium salt, aromatic phosphonium salt, aromatic iodonium salt, hydrazinium salt and iron salt of metallocene, each of which has a counter anion selected from BF₄, PF₆, AsF₆, SbF₆, B(C₆F₅)₄ and the like.
(3) Compounds capable of generating an acid by heating to not lower than 50°C in the presence or absence of water, such as trialkylphosphorous acid ester, triarylphosphorous acid ester, dialkylphosphorous acid ester, monoalkylphosphorous acid ester, hypophosphorous acid ester, ester of secondary or tertiary alcohol of organic carboxylic acid, hemiacetal ester of organic carboxylic acid, trialkylsilyl ester of organic carboxylic acid, and an ester compound of organic sulfonic acid and secondary or tertiary alcohol.

Of the above compounds, the compounds (3) are preferable because they have good compatibility with the silyl group-containing polymer and exhibit excellent storage stability when they are blended with a solution containing the silyl group-containing polymer.

In order to further improve resistance to oxidation deterioration or resistance to coloring, to the cycloolefin addition polymer obtained by the preparation process of the invention and to a silyl group-containing polymer solution composition for obtaining a crosslinked product, at least one agent selected from a phenolic antioxidant, a lactone antioxidant, a phosphorus antioxidant and a thioether antioxidant can be added in an amount of 0.001 to 5 parts by weight based on 100 parts by weight of the polymer.

The cycloolefin addition polymer obtained by the preparation process of the invention can be properly added to other cycloolefin addition polymers, hydrogenated cycloolefin ring-opened polymers, addition copolymers of α-olefins and cycloolefins, crystalline α-olefin polymers, rubbery copolymers of ethylene and α-olefins of 3 or more carbon atoms, hydrogenated butadiene polymers, hydrogenated butadiene/styrene block copolymer, hydrogenated isoprene polymers and the like, according to the desired properties.

The cycloolefin addition polymer obtained by the preparation process of the invention is molded into a sheet, a film or a thin film, or blended with other resins and then molded, and if necessary, the molded product is further crosslinked. The molded product thus obtained can be used for optical material parts, electronic parts, medical appliances, electrical insulating materials, packaging materials, etc.

Examples of the optical materials to which the cycloolefin addition polymer can be applied include light guide plates, protective films, polarizing films, retardation films, touch panels, transparent electrode substrates, optical recording substrates, such as CD, MD and DVD, TFT display substrates, color filter substrates, optical lenses and sealing materials. Examples of the electronic parts to which the cycloolefin addition polymer can be applied include containers, trays, carrier tapes, separation films, cleaning containers, pipes and tubes. Examples of the medical appliances to which the cycloolefin addition polymer can be applied include medicine containers, ampoules, syringes, transfusion fluid bags, sample containers, test tubes, blood-collecting tubes, sterilizing containers, pipes and tubes. Examples of the electrical insulating materials to which the cycloolefin addition polymer can be applied include covering materials for wires and cables, insulating materials for OA machines, such as computers, printers and copy machines, and insulating materials for printed boards. Examples of the packaging materials to which the cycloolefin addition polymer can be applied include packaging films for foods and medicines.

EXAMPLES
The present invention is further described with reference to the following examples, but it should be construed that the invention is in no way limited to those examples.

In the examples, molecular weight, total light transmittance, glass transition temperature and tensile strength/elongation were measured in the following manner.
(1) Molecular weight
   Molecular weight was measured by a Waters 150C model gel permeation chromatography (GPC) apparatus at a temperature of 120°C using an H type column (available from Tosoh Corporation) and using o-dichlorobenzene as a solvent. The molecular weight obtained was a value in terms of standard polystyrene.
(2) Total light transmittance
   Total light transmittance of a film having a thickness of 150 µm was measured in accordance with ASTM-D1003.
(3) Glass transition temperature
   Glass transition temperature was determined as a peak temperature of temperature dispersion of Tan δ (ratio of loss elastic modulus E" to storage elastic modulus E' (Tan δ = E"/E')) that was measured as dynamic viscoelasticity. Measurement of dynamic viscoelasticity was carried out using Rheovibron DDV-01FP (manufactured by Orientec Co., Ltd.), and a peak temperature of Tan δ was measured under the conditions of a measuring frequency of 10 Hz, a heating rate of 4°C/min, a vibration mode of a single wave and a vibration amplitude of 2.5 µm.
(4) Linear expansion coefficient
   Using TMA (thermal mechanical analysis) SS6100 (manufactured by Seiko Instruments Inc.), a strip film for test having a film thickness of about 150µm, a length of 10 mm and a width of 10 mm was stand upright and fixed, and to the strip film was applied a load of 1 g with a probe. In order to remove heat history of the film, the strip film was temporarily heated up to 200°C from room temperature at a rate of 5°C/min. Thereafter, the strip film was heated again from room temperature at a rate of 5°C/min, and from an inclination of extension of the strip film between 50°C and 150°C, a linear expansion coefficient was determined.
(5) Tensile strength/elongation (substitute measurement for brittleness/cracking)
   Tensile strength and elongation were measured at a pulling rate of 3 mm/min in accordance with JIS K7113.
(6) Contents of alkoxysilyl groups and ester groups in the cycloolefin addition polymer of the invention obtained were determined by ¹H-NMR measurement in C₆D₆, operating at 270 MHz.

Regarding a methoxy group, absorption (CH₃ of SiOCH₃) at 3.5 ppm was used, and regarding an ethoxy group, absorption (CH₂ of SiOCH₂CH₃) at 3.9 ppm was used.

Regarding a methyl ester group, resonance at 3.5 ppm (-C(O)OCH₃) was used, and regarding an ethyl ester group, resonance at 3.9 ppm (CH₂ of -C(O)OCH₂CH₃) was used.

When analysis by ¹H-NMR was difficult because of resonance overlapping, residual monomers in the polymer solution were analyzed by a gas chromatogram, and the amounts introduced into the copolymer were determined.

### Example 1

In a 100 ml glass pressure bottle, 6.8 g of toluene having a water content of 10 ppm, 60.8 g of cyclohexane having a water content of 7 ppm, 10 mmol (2.80 g) of 9-trimethoxysilyl-tetracyclo[6.2.1.1^{3,6}.0^{2,7}]dodec-4-ene (referred to as a "monomer A" hereinafter) and 90 mmol (8.47 g) of bicyclo[2.2.1]hept-2-ene were placed, and the bottle was sealed with a crown having a hole and a rubber packing.

To the pressure bottle, 25 ml (1.0% by mol based on all the monomers) of gaseous ethylene of 25°C and 0.1 MPa was introduced as a molecular weight modifier through the rubber packing. The pressure bottle containing the solvents and the monomers was heated to 75°C, and as catalyst components, palladium octanoate (0.0010 mg atom in terms of Pd atom), 0.0010 mmol of tricyclohexylphosphine, 0.0012 mmol of triphenylcarbenium(pentafluorophenyl)borate and 0.0050 mmol of triethylaluminum were added in this order to initiate polymerization.

The polymerization reaction was carried out at 75°C for 3 hours, and a conversion into a polymer was determined by solids content measurement of the polymer solution. Subsequently, the polymer solution was introduced into 1 liter of 2-propanol to obtain solids, and the solids were dried at 80°C for 17 hours under reduced pressure to obtain a polymer.

Results of the conversion, a content of structural units derived from the monomer A in the resulting polymer, a number-average molecular weight (Mn) and a weight-average molecular weight (Mw) are set forth in Table 1 together with a cone angle of the phosphine compound used.

### Example 2

Polymerization was carried out in the same manner as in Example 1, except that instead of tricyclohexylphosphine, tri-o-tolylphosphine was used as a phosphine compound.

Results of a conversion, a content of structural units derived from the monomer A in the resulting polymer, a number-average molecular weight (Mn) and a weight-average molecular weight (Mw) are set forth in Table 1 together with a cone angle of the phosphine compound used.

### Example 3

Polymerization was carried out in the same manner as in Example 1, except that triethylaluminum was not used.

Results of a conversion, a content of structural units derived from the monomer A in the resulting polymer, a number-average molecular weight (Mn) and a weight-average molecular weight (Mw) are set forth in Table 1 together with a cone angle of the phosphine compound used.

### Example 4

Polymerization was carried out in the same manner as in Example 1, except that instead of tricyclohexylphosphine, tris(pentafluorophenyl)phosphine was used as a phosphine compound and the polymerization time was changed to 5 hours.

Results of a conversion, a content of structural units derived from the monomer A in the resulting polymer, a number-average molecular weight (Mn) and a weight-average molecular weight (Mw) are set forth in Table 1 together with a cone angle of the phosphine compound used.

### Comparative Example 1

Polymerization was carried out in the same manner as in Example 1, except that instead of tricyclohexylphosphine, triphenylphosphine was used as a phosphine compound.

Although a conversion into a polymer after 3 hours was 90%, the polymerization system became high-molecular weight and was solidified. The resulting polymer was insoluble in deuterated benzene at 50°C and o-dichlorobenzene at 120°C, and a content of structural units derived from the monomer A in the resulting polymer and molecular weights of the polymer could not be measured.

### Comparative Example 2

Polymerization was carried out in the same manner as in Example 1, except that instead of tricyclohexylphosphine, tri-n-butylphosphine was used as a phosphine compound.

Although a conversion into a polymer after 3 hours was 95%, the polymerization system became high-molecular weight and was solidified. The resulting polymer was insoluble in deuterated benzene at 50°C and o-dichlorobenzene at 120°C, and a content of structural units derived from the monomer A in the resulting polymer and molecular weights of the polymer could not be measured.

### Comparative Example 3

Polymerization was carried out in the same manner as in Example 1, except that instead of tricyclohexylphosphine, tri-n-butylphosphine was used as a phosphine compound and the amount of ethylene used as a molecular weight modifier was changed to 2500 ml (100% by mol based on all the monomers) at 25°C and 0.1 MPa.

Results of a conversion, a content of structural units derived from the monomer A in the resulting polymer, a number-average molecular weight (Mn) and a weight-average molecular weight (Mw) are set forth in Table 1 together with a cone angle of the phosphine compound used.

### Comparative Example 4

Polymerization was carried out in the same manner as in Example 1, except that instead of tricyclohexylphosphine, tris(2,4,6-trimethylphenyl)phosphine was used as a phosphine compound.

Although a conversion into a polymer after 3 hours was measured, polymerization reaction did not proceed at all, and a polymer could not be obtained.

**Table 1**

| | Phosphine Compound | | Conversion into Polymer | Content of structura 1 unit derived from monomer A | Molecular weight of polymer (×10⁴) | |
|---|---|---|---|---|---|---|
| | Type | Cone angl e (°) | (%) | (mol %) | Mn | Mw |
| Ex. 1 | Tricycle hexyl phosphine | 170 | 92 | 9.8 | 4.2 | 15.9 |
| Ex. 2 | tri-o-tolyl phosphine | 194 | 80 | 10.7 | 6.4 | 22.5 |
| Ex. 3 | Tricycle hexyl phosphine | 170 | 85 | 9.8 | 4.7 | 18.7 |
| Ex. 4 | tris(pent afluoro phenyl) phosphine | 184 | 73 | 9.6 | 7.6 | 32.5 |
| Cmp. Ex. 1 | triphenyl phosphine | 145 | 90 | Immeasurable | Immeasu -rable | Immeas urable |
| Cmp. Ex. 2 | tri-n-butyl phosphine | 132 | 95 | Immeasurable | Immeasu -rable | Immeas urable |
| Cmp. Ex. 3 | tri-n-butyl phosphine | 132 | 93 | 9.8 | 4.5 | 18.9 |
| Cmp. Ex. 4 | Tris (2,4,6-trimethyl phenyl) phosphine | 212 | 0 | - | - | - |

| | | | | | | |
|---|---|---|---|---|---|---|
| *) "immeasurable": Measurement could not be made because the polymer was not dissolved. | | | | | | |

### Example 5

In a 100 ml glass pressure bottle, 54.1 g of toluene having a water content of 10 ppm, 8 mmol (2.24 g) of 9-trimethoxysilyl-tetracyclo[6.2.1.1^{3,6}.0^{2,7}]dodec-4-ene (monomer A) and 72 mmol (6.78 g) of bicyclo[2.2.1]hept-2-ene were placed, and the bottle was sealed with a crown having a hole and a rubber packing.

To the pressure bottle, 20 ml (0.8 mmol, corresponding to 1.0% by mol based on all the monomers) of gaseous ethylene of 25°C and 0.1 MPa was introduced as a molecular weight modifier through the rubber packing.

The pressure bottle containing the solvent and the monomers was heated to 75°C, and as catalyst components, palladium acetate (0.0002 mg atom in terms of Pd atom), 0.0002 mmol of tricyclohexylphosphine, 0.00024 mmol of triphenylcarbenium (pentafluorophenyl)borate and 0.0010 mmol of triethylaluminum were added in this order to initiate polymerization.

The polymerization reaction was carried out at 75°C for 2 hours, and a conversion into a polymer was determined by solids content measurement of the polymer solution. Subsequently, the polymer solution was introduced into 0.8 liter of 2-propanol to obtain solids, and the solids were dried at 80°C for 17 hours under reduced pressure to obtain a polymer.

Results of the conversion, a content of structural units derived from the monomer A in the resulting polymer, a number-average molecular weight (Mn) and a weight-average molecular weight (Mw) are set forth in Table 2 together with the amount (% by mol based on all the monomers) of the molecular weight modifier used.

### Example 6

Polymerization was carried out in the same manner as in Example 5, except that the amount of gaseous ethylene used as a molecular weight modifier was changed to 40 ml (0.16 mmol, corresponding to 2.9% by mol based on all the monomers) at 25°C and 0.1 MPa.

Results of a conversion, a content of structural units derived from the monomer A in the resulting polymer, a number-average molecular weight (Mn) and a weight-average molecular weight (Mw) are set forth in Table 2 together with the amount (% by mol based on all the monomers) of the molecular weight modifier used.

### Example 7

Polymerization was carried out in the same manner as in Example 5, except that the amount of gaseous ethylene used as a molecular weight modifier was changed to 100 ml (4.0 mmol, corresponding to 5.0% by mol based on all the monomers) at 25°C and 0.1 MPa and the polymerization time was changed to 3.5 hours.

Results of a conversion, a content of structural units derived from the monomer A in the resulting polymer, a number-average molecular weight (Mn) and a weight-average molecular weight (Mw) are set forth in Table 2 together with the amount (% by mol based on all the monomers) of the molecular weight modifier used.

### Example 8

Polymerization was carried out in the same manner as in Example 5, except that the amount of gaseous ethylene used as a molecular weight modifier was changed to 200 ml (8.0 mmol, corresponding to 10% by mol based on all the monomers) at 25°C and 0.1 MPa and the polymerization time was changed to 3.5 hours.

Results of a conversion, a content of structural units derived from the monomer A in the resulting polymer, a number-average molecular weight (Mn) and a weight-average molecular weight (Mw) are set forth in Table 2 together with the amount (% by mol based on all the monomers) of the molecular weight modifier used.

### Comparative Example 5

Polymerization was carried out in the same manner as in Example 5, except that instead of ethylene, gaseous propylene was used as a molecular weight modifier in an amount of 20 ml (0.8 mmol, corresponding to 1.0% by mol based on all the monomers) at 25°C and 0.1 MPa and the polymerization time was changed to 3.0 hours.

Although a conversion into a polymer after 3 hours was 99%, the polymerization system was solidified. The resulting polymer was insoluble in deuterated benzene at 50°C and o-dichlorobenzene at 120°C, and a content of structural units derived from the monomer A in the resulting polymer, a number-average molecular weight (Mn) of the polymer and a weight-average molecular weight (Mw) of the polymer could not be measured.

### Comparative Example 6

Polymerization was carried out in the same manner as in Example 5, except that instead of ethylene, gaseous propylene was used as a molecular weight modifier in an amount of 200 ml (8 mmol, corresponding to 10% by mol based on all the monomers) at 25°C and 0.1 MPa and the polymerization time was changed to 3.0 hours.

Although a conversion into a polymer after 3 hours was 95%, the polymerization system was solidified. The resulting polymer was insoluble in deuterated benzene at 50°C and o-dichlorobenzene at 120°C, and a content of structural units derived from the monomer A in the resulting polymer, a number-average molecular weight (Mn) of the polymer and a weight-average molecular weight (Mw) of the polymer could not be measured.

### Comparative Example 7

Polymerization was carried out in the same manner as in Example 5, except that instead of ethylene, 1-hexene was used as a molecular weight modifier in an amount of 0.07 g (0.8 mmol, corresponding to 1.0% by mol based on all the monomers), the amount of toluene having a water content of 10 ppm was changed to 54.0 g, and the polymerization time was changed to 3.0 hours.

Although a conversion into a polymer after 3 hours was 99%, the polymerization system was solidified. The resulting polymer was insoluble in deuterated benzene at 50°C and o-dichlorobenzene at 120°C, and a content of structural units derived from the monomer A in the resulting polymer, a number-average molecular weight (Mn) of the polymer and a weight-average molecular weight (Mw) of the polymer could not be measured.

### Comparative Example 8

Polymerization was carried out in the same manner as in Example 5, except that instead of ethylene, 1-hexene was used as a molecular weight modifier in an amount of 6.73 g (80 mmol, corresponding to 100% by mol based on all the monomers), the amount of toluene having a water content of 10 ppm was changed to 47.7 g, and the polymerization time was changed to 3.0 hours.

Results of a conversion, a content of structural units derived from the monomer A in the resulting polymer, a number-average molecular weight (Mn) and a weight-average molecular weight (Mw) are set forth in Table 2 together with the amount (% by mol based on all the monomers) of the molecular weight modifier used.

### Comparative Example 9

Polymerization was carried out in the same manner as in Example 5, except that instead of ethylene, 1-hexene was used as a molecular weight modifier in an amount of 13.47 g (160 mmol, corresponding to 200% by mol based on all the monomers), the amount of toluene having a water content of 10 ppm was changed to 40.6 g, and the polymerization time was changed to 3.0 hours.

Results of a conversion, a content of structural units derived from the monomer A in the resulting polymer, a number-average molecular weight (Mn) and a weight-average molecular weight (Mw) are set forth in Table 2 together with the amount (% by mol based on all the monomers) of the molecular weight modifier used.

**Table 2**

| | Molecular weight modifier | | Conver -sion into polyme r (%) | Content of structural unit derived from monomer A (mol %) | Molecular weight of polymer (×10⁴) | |
|---|---|---|---|---|---|---|
| | Type | Amount added *1 (mol%) | | | Mn | Mw |
| Ex. 5 | Ethylene | 1.0 | 97 | 9.2 | 3.6 | 15.1 |
| Ex. 6 | ethylene | 2.0 | 92 | 9.0 | 1.9 | 8.9 |
| Ex. 7 | ethylene | 5.0 | 99 | 8.6 | 1.1 | 4.3 |
| Ex. 8 | ethylene | 10 | 97 | 9.4 | 0.9 | 2.9 |
| Cmp. Ex. 5 | propylen e | 1.0 | 95 | Immeasurable | Immeasurable | Immeasurable |
| Cmp. Ex. 6 | propylen e | 10 | 99 | Immeasurable | Immeasurable | Immeasurable |
| Cmp. Ex. 7 | 1-hexene | 1.0 | 92 | Immeasurable | Immeasurable | Immeasurable |
| Cmp. Ex. 8 | 2-hexene | 100 | 99 | 9.7 | 4.8 | 28.5 |
| Cmp. Ex. 9 | 3-hexene | 200 | 99 | 10.1 | 3.0 | 13.9 |

| | | | | | | |
|---|---|---|---|---|---|---|
| *) "immeasurable": Measurement could not be made because the polymer was not dissolved. *1) Proportion to all the monomers | | | | | | |

### Example 9

Polymerization
In a 100 ml glass pressure bottle, 60.8 g of toluene having a water content of 10 ppm, 6.8 g of cyclohexane having a water content of 7 ppm, 4 mmol of 5-trimethoxysilylbicyclo[2.2.1]hept-2-ene and 90 mmol (8.47 g) of bicyclo[2.2.1]hept-2-ene were placed, and the bottle was sealed with a crown having a hole and a rubber packing.

To the pressure bottle, 25 ml (1.0% by mol based on all the monomers) of gaseous ethylene of 25°C and 0.1 MPa was introduced as a molecular weight modifier through the rubber packing. The pressure bottle containing the solvents and the monomers was heated to 75°C, and as catalyst components, palladium octanoate (0.0010 mg atom in terms of Pd atom), 0.0010 mmol of tricyclohexylphosphine, 0.0012 mmol of triphenylcarbenium (pentafluorophenyl)borate and 0.0050 mmol of triethylaluminum were added in this order to initiate polymerization.

The polymerization reaction was carried out at 75°C, and every 15 minutes from initiation of the polymerization, 0.75 mmol of 5-trimethoxysilylbicyclo[2.2.1]hept-2-ene was successively added 8 times to the polymerization system. The total amount of the 5-trimethoxysilylbicyclo[2.2.1]hept-2-ene used in the polymerization reaction was 10 mmol. After addition of the whole 5-trimethoxysilylbicyclo[2.2.1]hept-2-ene was completed, the polymerization reaction was further carried out for 2.5 hours, and a conversion into a polymer was determined by solids content measurement of the polymer solution. As a result, the conversion was 97%.

Subsequently, the polymer solution was introduced into 1 liter of 2-propanol to obtain solids, and the solids were dried at 80°C for 17 hours under reduced pressure to obtain a polymer. The proportion of structural units derived from 5-trimethoxysilylbicyclo[2.2.1]hept-2-ene in the resulting polymer was 9.8% by mol. The number-average molecular weight (Mn) of the resulting polymer was 59,000, the weight-average molecular weight (Mw) of the polymer was 187,000, and the glass transition temperature (Tg) of the polymer was 375°C.

### Preparation of film

In a mixed solvent of 10 ml of methylcyclohexane and 40 ml of xylene, 10 g of the polymer obtained was dissolved, and to the solution were added pentaerythritol-tetrakis[3-(3,5-di-t-butyl-4-hydroxypheny)propionate] and tris(2,4-di-t-butylphenyl)phosphite as antioxidants in each amount of 0.6 part by weight based on 100 parts by weight of the polymer and cyclohexyl p-toluenesulfonate as a crosslinking agent in an amount of 0.07 part by weight based on 100 parts by weight of the polymer.

The polymer solution was filtered through a membrane filter having a pore size of 1 µm to remove foreign matters and then cast onto a polyester film at 25°C. The atmospheric temperature was slowly raised up to 50°C to evaporate the mixed solvent and thereby form a film.

When the amount of the residual solvent in the film became 5 to 10%, the film was exposed to superheated steam of 180°C and 1 atm for 1 hour to crosslink the film. Then, the film was exposed to a methylene chloride vapor atmosphere at 25°C for 30 minutes to remove the residual solvent.

Thereafter, the film was vacuum dried at 80°C for 30 minutes to remove methylene chloride. Thus, a crosslinked film having a thickness of 150 µm was prepared. Evaluation results are set forth in Table 3.

Because the resulting film had been crosslinked, the film was insoluble in hydrocarbon solvents and halogenated hydrocarbon solvents, such as toluene, xylene, cyclohexane, chlorobenzene and o-dichlorobenzene, dimethyl sulfoxide, liquid crystals (Merck ZIL-4792), etc.

**Table 3**

| Properties of crosslinked film | | | |
|---|---|---|---|
| Total light transmittance (%) | Tensile strength (MPa) | Elongation (%) | Linear expansion coefficient (ppm/°C) |
| 91 | 65 | 6.5 | 45 |

### Example 10

Polymerization was carried out in the same manner as in Example 5, except that instead of tricyclohexylphosphine, tricyclohexylphosphonium 2-ethylhexanoate was used in an amount of 0.0005 mmol and the amount of triethylaluminum used was changed to 0.0025 mmol.

The polymerization system did not become turbid till polymerization of 3 hours was completed, and the conversion into a polymer was 98%.

The number-average molecular weight (Mn) of the resulting polymer was 65,000, the weight-average molecular weight (Mw) of the polymer was 178,000, and the glass transition temperature (Tg) of the polymer was 370°C. From the ¹H-NMR analysis at 270 MHz, the proportion of structural units derived from 9-trimethoxysilyl-tetracyclo[6.2.1.1^{3,6}.0^{2,7}]dodec-4-ene in the resulting copolymer proved to be 9.8% by mol.

### Example 11

In a 100 ml glass pressure bottle, 58 g of toluene as a solvent, 90 mmol of bicyclo[2.2.1]hept-2-ene and 10 mmol of 9-methyl-9-methoxycarbonyl-tetracyclo[6.2.1.1^{3,6}.0^{2,7}]dodec-4-ene were placed, and the bottle was sealed with a crown having a hole and a rubber packing.

To the pressure bottle, 30 ml (1.34% by mol based on all the monomers) of an ethylene gas of 25°C and 0.1 MPa was introduced through the rubber packing. Thereafter, the pressure bottle was heated to 75°C, and bis(acetylacetonato)palladium (0.0002 mg atom in terms of Pd atom), 0.00016 mmol of tricyclohexylphosphine, 0.00025 mmol of triphenylcarbenium (pentafluorophenyl)borate and 0.0020 mmol of diisobutylaluminum hydride were added to initiate polymerization.

The polymerization system did not become turbid till polymerization of 3 hours was completed, and the conversion into a polymer was 89%. The proportion of structural units derived from 9-methyl-9-methoxycarbonyl-tetracyclo[6.2.1.1^{3,6}.0^{2,7}]dodec-4-ene in the resulting polymer was 9.0% by mol. The number-average molecular weight of the resulting polymer was 52,000, the weight-average molecular weight of the polymer was 153,000, and the glass transition temperature (Tg) of the polymer was 375°C.

The amounts of metals remaining in the polymer which had been recovered in the same manner as in Example 1 were measured by atomic absorption spectroscopy, and as a result, the amount of Pd was 0.5 ppm and the amount of A1 was 0.8 ppm.

### Example 12

Polymerization was carried out in the same manner as in Example 9, except that instead of 5-trimethoxysilylbicyclo[2.2.1]hept-2-ene, 5-[1'-methyl-2',6'-dioxa-4',4'-dimethyl-1'-silacyclohexyl]-bicyclo[2.2.1]hept-2-ene (amount initially introduced: 4 mmol, amount successively added: 0.75 mmol × 8 times, total amount: 10 mmol) was used, and the polymerization time after completion of addition of the whole 5-[1'-methyl-2',6'-dioxa-4',4'-dimethyl-1'-silacyclohexyl]-bicyclo[2.2.1]hept-2-ene was changed to 3.0 hours.

The conversion of monomers into a polymer after 3.0 hours was 99%. The proportion of structural units derived from 5-[1'-methyl-2',6'-dioxa-4',4'-dimethyl-1'-silacyclohexyl]-bicyclo[2.2.1]hept-2-ene was 9.8% by mol.

The number-average molecular weight (Mn) of the resulting polymer was 51,000, the weight-average molecular weight (Mw) of the polymer was 182,000, and the glass transition temperature (Tg) of the polymer was 375°C.

### Example 13

In a 100 ml glass pressure bottle, 6.8 g of toluene having a water content of 10 ppm, 60.8 g of cyclohexane having a water content of 7 ppm, 97 mmol of bicyclo[2.2.1]hept-2-ene and 1 mmol of 5-trimethoxysilylbicyclo[2.2.1]hept-2-ene were placed, and the bottle was sealed with a crown having a hole and a rubber packing.

To the pressure bottle, 25 ml (1.0% by mol based on all the monomers) of gaseous ethylene of 25°C and 0.1 MPa was introduced as a molecular weight modifier through the rubber packing.

The pressure bottle containing the solvents and the monomers was heated to 75°C, and as catalyst components, palladium acetate (0.00033 mg atom in terms of Pd atom), 0.00015 mmol of tricyclohexylphosphine, 0.00035 mmol of triphenylcarbenium (pentafluorophenyl)borate and 0.0033 mmol of triethylaluminum were added in this order to initiate polymerization. After 30 minutes and 60 minutes from initiation of the polymerization, respectively, 1 mmol of 5-trimethoxysilylbicyclo[2.2.1]hept-2-ene was added, and the polymerization reaction was carried out at 75°C for 3 hours. The polymer solution proved to be a homogeneous solution. Then, a conversion into a polymer determined by solids content measurement of the polymer solution was 97%. The polymer solution was introduced into 2 liters of isopropanol and thereby solidified, followed by drying at 90°C for 7 hours to obtain a polymer. The number-average molecular weight (Mn) of the resulting polymer was 58,000, the weight-average molecular weight (Mw) of the polymer was 193,000, and the glass transition temperature (Tg) of the polymer was 380°C. The proportion of structural units derived from 5-trimethoxysilylbicyclo[2.2.1]hept-2-ene in the resulting polymer was 3.0% by mol.
The amounts of Pd and Al remaining in the polymer which had been recovered in the same manner as in Example 1 were measured by atomic absorption spectroscopy, and as a result, the amount of Pd was 0.3 ppm and the amount of Al was 0.5 ppm.

### Example 14

Polymerization was carried out in the same manner as in Example 13, except that instead of 6.8 g of toluene and 60.8 g of cyclohexane, 67.6 g of toluene was used as a solvent.

After 0.5 hour from initiation of the polymerization, a polymer was precipitated, and after 1 hour, the polymer solution became turbid. After 3 hours, the polymer solution was completely solidified, and the polymerization was stopped. The conversion into a polymer was 92%.

The resulting polymer was soluble in cyclohexane at 50°C and o-dichlorobenzene at 120°C, and had a number-average molecular weight of 67,000 and a weight-average molecular weight of 200,400.

### Comparative Example 10

Polymerization was carried out in the same manner as in Example 1, except that instead of ethylene, 1.0 mmol of a hydrogen gas of 25°C and 0.1 MPa was introduced as a molecular weight modifier. After polymerization for 3 hours, the polymer solution became high-molecular weight and was solidified. The conversion of monomers into a polymer was 98%.

The resulting polymer was insoluble in cyclohexane at 50°C and o-dichlorobenzene at 120°C, and molecular weights of the polymer could not be measured.

### Example 15

In a 100 ml pressure bottle, 50 g of cyclohexane and 10 g of toluene as solvents, 100 mmol of 5-n-hexyl-bicyclo[2.2.1]hept-2-ene having a ratio of endo form/exo form (stereoisomers) of 80/20 as a monomer and 1 mmol (corresponding to 1.0% by mol based on the whole monomer) of ethylene were placed. To the pressure bottle, a catalyst, which had been obtained by aging palladium octanoate (0.0010 mg atom in terms of Pd atom), 0.0010 mmol of tricyclohexylphosphine, 0.0032 mmol of tris(pentafluorophenyl)boron and 0.0050 mmol of triisobutylaluminum at 25°C for 10 minutes, was finally added, and polymerization was performed at 60°C for 2 hours.

The conversion into a polymer was 78%. The resulting polymer was dissolved in cyclohexane and had a number-average molecular weight (Mn) of 41,000, a weight-average molecular weight (Mw) of 145,000 and a glass transition temperature (Tg) of 265°C. When the polymer was molded into a film by a casting method using methylcyclohexane as a solvent, the resulting film was transparent.

## Claims

1. A process for preparing a cycloolefin addition polymer, comprising addition-polymerizing monomers containing a cycloolefin compound represented by the following formula (1) in the presence of:
a multicomponent catalyst comprising:
(a) a palladium compound,
(b) a compound selected from an ionic boron compound, an ionic aluminum compound, a Lewis acidic aluminum compound and a Lewis acidic boron compound, and
(c) a phosphine compound having a substituent selected from an alkyl group, a cycloalkyl group, and an aryl group of 3 to 15 carbon atoms, and having a cone angle (θ deg) of 170 to 200, or its phosphonium salt, and
ethylene; 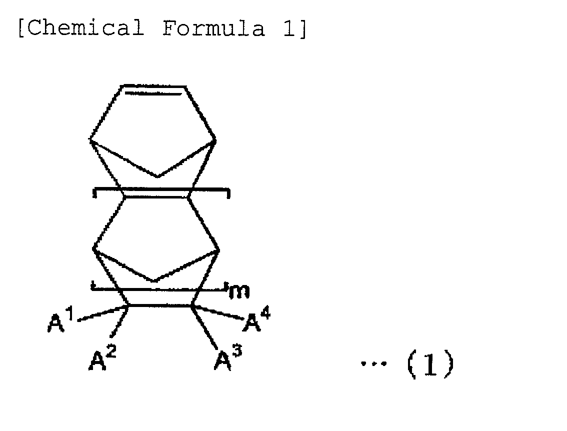 wherein A¹ to A⁴ are each independently a hydrogen atom, an alkyl group, a cycloalkyl group, an aryl group, an ester group, an alkoxy group or a trialkylsilyl group of 1 to 15 carbon atoms, or a hydroxyl group, and may be each bonded to a ring structure through an alkylene group of 1 to 20 carbon atoms or a linkage of 0 to 10 carbon atoms containing at least one atom selected from an oxygen atom, a nitrogen atom and a sulfur atom, A¹ and A² may together form an alkylidene group of 1 to 5 carbon atoms, a substituted or unsubstituted alicyclic or aromatic ring of 5 to 20 carbon atoms or a heterocyclic ring of 2 to 20 carbon atoms, A¹ and A³ may together form a substituted or unsubstituted alicyclic or aromatic ring of 5 to 20 carbon atoms or a heterocyclic ring of 2 to 20 carbon atoms, and m is 0 or 1.

2. The process for preparing a cycloolefin addition polymer as claimed in claim 1, wherein the multicomponent catalyst comprises:
(a) a palladium compound,
(b) a compound selected from an ionic boron compound, an ionic aluminum compound, a Lewis acidic aluminum compound and a Lewis acidic boron compound,
(c) a phosphine compound having a substituent selected from an alkyl group, a cycloalkyl group and an aryl group of 3 to 15 carbon atoms, and having a cone angle (θ deg) of 170 to 200, or its phosphonium salt,
and additionally
(d) an organoaluminum compound.

3. The process for preparing a cycloolefin addition polymer as claimed in claim 1 or 2, wherein monomers containing 70 to 98% by mol of the cycloolefin compound represented by the formula (1) and 2 to 30% by mol of a cycloolefin compound having an alkoxysilyl group and represented by the following formula (2)-1 and/or the following formula (2)-2 are addition-polymerized; 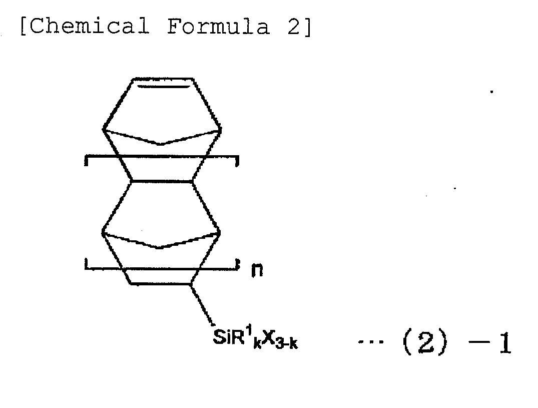 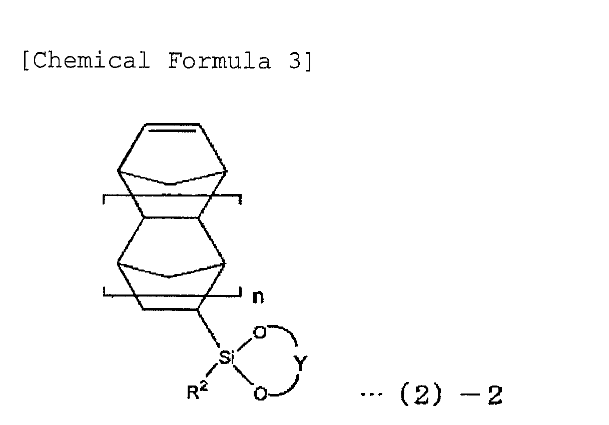 wherein R¹ and R² are each a substituent selected from an alkyl group, a cycloalkyl group, an aryl group of 1 to 10 carbon atoms, and a halogen atom,
X is an alkoxy group of 1 to 5 carbon atoms,
Y is a residue of a hydroxyl group of an aliphatic diol of 2 to 4 carbon atoms,
k is an integer of 0 to 2, and
n is 0 or 1.

4. The process for preparing a cycloolefin addition polymer as claimed in any one of claims 1 to 3, wherein the palladium compound (a) is an organic carboxylic acid salt of palladium or a β-diketone compound of palladium.

5. The process for preparing a cycloolefin wherein the amount of ethylene used in the addition polymerization is in the range of 0.1 to 5.0% by mol based on all the monomers.

6. The process for preparing a cycloolefin addition polymer as claimed in any one of claims 1 to 5, wherein monomers containing bicyclo[2.2.1]hept-2-ene in an amount of not less than 80% by mol in all the monomers are addition-polymerized in the presence of a polymerization solvent containing an alicyclic hydrocarbon solvent in an amount of at least 50% by weight.
